# EUROPÄISCHE PATENTSCHRIFT

(11) **EP 2 175 424 B1**
(45) Veröffentlichungstag und Bekanntmachung des Hinweises auf die Patenterteilung: **27.04.2016**
(21) Anmeldenummer: 09012606.1
(22) Anmeldetag: 06.10.2009
(51) Int. Cl.: G07C 5/08, G05B 19/408, G05B 23/02

(54) **Verfahren zur Steigerung der Effizienz von Fahrzeugen bzw. Fahrzeugsystemen mit und ohne Waffensysteme**
Method for improving the efficiency of vehicles or vehicle systems with and without weapon systems
Procédé d'augmentation de l'efficacité des véhicules ou des systèmes de véhicules, avec et sans systèmes d'armement

(30) Priorität: 13.10.2008 DE 102008064626; 21.11.2008 DE 102008058545
(43) Veröffentlichungstag der Anmeldung: 14.04.2010
(73) Patentinhaber: Rheinmetall Landsysteme GmbH, 29345 Unterlüß (DE)
(72) Erfinder: Lach, Björn, 24211 Preetz (DE); Besuch, Jürgen, 24159 Kiel (DE); Fischer, Timo, 24159 Kiel (DE); Richter, Ralph, 24211 Preetz (DE); Vom Stein, Stefan, 24222 Schwentinental (DE); Kauffels, Peter, 24114 Kiel (DE); Hahn, Torsten, 24113 Molfsee (DE); Zielonka, Christoph, 24114 Kiel (DE); Mahnke, Wolfgang, 24229 Dänischenhagen (DE); Grimm, Werner, 34127 Kassel (DE); Blumenstein, Klaus, 37235 Hessich Lichtenau (DE); Fröhlich, Norbert, 24145 Kiel (DE)
(74) Vertreter: Dietrich, Barbara

(56) Entgegenhaltungen:
- DE-A1- 10 235 525
- DE-A1-102007 010 978
- US-A1- 2006 217 993
- US-A1- 2006 235 707
- US-A1- 2008 125 933

## Beschreibung

Die Erfindung betrifft ein, die Effizienzsteigerung von gepanzerten und ungepanzerten Landsystemen, wie Fahrzeugsysteme mit oder ohne Waffensysteme, Bergepanzer, Pionierpanzer sowie Unterstützungsfahrzeuge, steigerndes Verfahren.

On-Board Diagnosen als auch Off-Board Diagnosen, insbesondere in der zivilen Fahrzeugindustrie gibt es derer viele. Während die Off-Board Diagnose in der Regel auf einem externen Rechner (Werkstatt) abläuft, wird bei der On-Board Diagnose ein fahrzeugeigenes System verwendet. So beschreibt die DE 10 2005 062 122 A1 ein Verfahren und ein Steuergerät zur Diagnose eines Katalysatorsystems. Die DE 10 2006 016 339 A1 beschäftigt sich mit einem Verfahren zur Diagnose einer Tanklüftungsanlage sowie mit einer Vorrichtung zur Durchführung des Verfahrens. Die DE 10 2006 061 523 B4 wiederum offenbart ein Diagnoseverfahren sowie ein Diagnosesystem und zugehörige Messwertaufnehmer, um das Entstehen von Fehlern zu erkennen und auf mögliche Ursachen für Fehlfunktionen des der Diagnose unterzogenen Systems zu schlussfolgern. Ein weiteres Diagnosegerät ist der DE 20 2006 019 993 U1 entnehmbar.

Ein nicht uninteressanter Ansatz für eine Diagnose in automotiven Anwendungen bringt die DE 10 2006 017 824 A1. Hier wird vorgeschlagen, die modellbasierte und die assoziative Diagnose miteinander zu kombinieren. Grundlegende Idee dabei ist, ein Modell des entsprechenden Systems in verschiedenen Fehlermodi und in seinem typischen Eingabenbereich zu simulieren und eine Simulationsdatenbank anzulegen. Aus dieser wird ein vereinfachtes, regelbasiertes Verhaltensmodell erstellt etc. und für eine heuristische Klassifikation der in Frage kommenden Fehler optimiert, wobei berücksichtigt wird, dass beispielsweise die Fahrzeugelektronik nur die Auswirkung des Fehlers erkennt, jedoch nicht den Fehler selbst.

Mit der DE 10 2005 015 664 A1 wird ein Diagnosesystem zur Bestimmung einer gewichteten Liste möglicherweise fehlerhafter Komponenten aus Fahrzeugdaten und Kundenangaben publiziert. Ein Servicemechaniker kann durch Setzen eines Fokus innerhalb des automatisch ermittelten Suchraums die Fehlersuche auf ausgewählte Fehlercodes oder Funktionen einschränken.

Aus der DE 10 2007 010 978 A1 ist ein weiterer Lösungsansatz bekannt, bei welchem lediglich das bei der Produktion des elektrischen Systems anfallende Wissen über die einzelnen Varianten verwendet wird, um hieraus ein wahrscheinlichkeitsbasiertes Netzwerk zu erzeugen, mit dessen Hilfe dessen beobachtete Fehlerereignisse auswertbar sind, um eine gewünschte Liste an möglichen fehlerhaften Komponenten gewichtet nach Vertrauenswerten für eine Fehlerhaftigkeit der einzelnen Komponenten zu erhalten.

Ein Verfahren zur Simulation fiktiver Systemzustände eines zentralrechnergesteuerten Systems, insbesondere eines Fahrzeugsystems oder eines Waffensystems ist aus der DE 10 2005 018 213 A1 bekannt.

Die vorliegende Erfindung stellt sich, basierend auf derartige Ansätze, die Aufgabe, eine Möglichkeit zur Unterstützung des Konzepts aufzuzeigen, die eine Effizienzerhöhung beim Betrieb von Fahrzeug- und Waffensystemen insbesondere beim Anwender ermöglicht.

Gelöst wird die Aufgabe durch die Merkmale des Patentanspruchs 1. Vorteilhafte Ausgestaltungen sind in den Unteransprüchen vermerkt.

Die Grundidee der Erfindung liegt darin, bestimmte Fahrzeugdaten in eine sogenannte (digitale) Fahrzeugakte einzustellen, die eine ganzheitliche Betrachtung von fahrzeug- und waffensystemrelevanten logistischen Daten im Verbund mit den logistischen Prozessen, Organisations-, Informations- und Kommunikationsstrukturen des militärischen und polizeilichen Bedarfsträger /-deckers ermöglicht. Dabei werden Daten automatisch oder manuell erfasst und unter militärisch oder polizeilich logistischen Gesichtspunkten weiter generiert, ausgewertet, prognostiziert und für verschiedene Anwendungen entsprechend den Aufgaben der Fahrzeuge zur Verfügung gestellt.

Zur eindeutigen Identifizierung wäre das Abspeichern der Vers-Nr. und Bezeichnung, der Teilekennzeichnung, der Seriennummer, des Herstellers, der Softwareversion, der Erstbetriebnahme, der (vom Hersteller angegebenen Betriebsstunden / Laufleistung, das Einbaudatum, durchgeführte Änderungsanträge, das Ausfalldatum mit erreichter Betriebsleistung sowie die Fehlerbeschreibung anzustreben. Des Weitere werden Daten hinterlegt, die sich auf das Gesamtfahrzeug beziehen, wie Fahrzeugkennzeichen (Y-Nummer), Dienststellen- Nr. (Einheit), Referenzkonfigurationstand, Laufleistung, Betriebsstunden, Verbrauch, durchgeführte Untersuchungen etc.

Diese digitale Fahrzeugakte ermöglicht somit das Anlegen und Pflegen des Bauzustandes eines militärischen Landsystems. In idealer Weise werden diese Daten zudem an eine zentrale Einheit gesendet, wodurch die Daten einzelner Fahrzeugfamilien (gleichartige Fahrzeuge mit gleichen militärischen Aufgaben) miteinander verglichen und für die Ausfallprognose der Bauteile andere Fahrzeugmitglieder herangezogen werden können. Aus den logistischen Daten in den militärischen und polizeilichen Informationssystemen können weiter ausgewertete logistische Daten in die militärischen und polizeilichen Einzelsysteme als Handlungsempfehlungen für die Besatzungen oder den Instandhaltungssetzer vor Ort geliefert werden.

Als Hardware wird bedarfsweise ein Rechner ins Fahrzeug integriert, mit dem das Erfassen, Generieren und die Auswertung / Prognose von allen im Bezug auf das Fahrzeug relevanten, aktuellen logistischen Daten ständig durchführbar ist. Dieser Rechner dient externen Komponenten als Instandhaltungsrechner oder einem zentralen ERP-System als einheitliche Gegenstelle im Fahrzeug. Damit die gleiche logistische Intelligenz in jedes Fahrzeug verbaut werden kann, wird eine Trennung in querschnittliche Funktionalitäten und Fahrzeugadaption vorgenommen, wobei der querschnittliche Rechner für eine einheitliche Kommunikation mit der Außenwelt sorgt. Die Anpassung an das jeweilige Fahrzeug (Anbindung an Bussysteme, Anbindung an Sensorik) wird durch eigenständige Schnittstellenzusatzmodule realisiert. Rechner und Schnittstellenzusatzmodule werden unabhängig vom Fahrzeug mittels eines einheitlichen Bussystems verbunden, was die logistische Einbindung von Altsystemen ermöglicht.

Damit wird das Störmanagement weiter ausgebaut und neben der Erfassung fahrzeuginterner Stördaten auch die Erfassung fahrzeugexterner Stördaten realisiert, um diese der Störanalyse bereitzustellen. Dieses Stördatenmanagement baut dabei auf ein so genanntes Betriebsdatenmanagement auf, das eine Datensammlungsaufbereitung vorsieht mit zentraler und einer Fahrzeug übergreifenden Auswertung. Aus dem Stördatenmanagement wiederum lassen sich Informationen über die Verfügbarkeit, über Betriebsdaten und eine Nachweisführung aufbauen, die ihrerseits dann in die Logistik eingreifen. So kann die Instandhaltung von Fahrzeugen und Waffensystemen vorab geplant werden und eine so genannte Instandhaltungshistorie mit einer planbaren Instandhaltungswahrscheinlichkeit aufgebaut werden. Wichtig dabei ist, dass diese Informationen bzw. Daten genutzt werden können für eine effektive Materialbeschaffung/-verwaltung. Von besonderem Interesse für die Logistikplanung ist die Prognose zukünftiger Ausfallraten.

Vorliegende Lösung dient somit der Effizienzsteigerung von gepanzerten und ungepanzerten Landsystemen (Teil- oder Gesamtsystem) des Militärs, der Polizei etc. bei der Entwicklung, Planung, Organisation, Ausbildung, dem Betrieb, der Instandhaltung, Wartung und - von großer Wichtigkeit - der Einsatzunterstützung, da der Einsatz von logistischem Personal gezielt gesteuert werden kann, durch beispielsweise vorausschauende Ersatzteilanforderung. Ausfallzeiten können reduziert werden und einsatzwichtige Systeme und Komponenten vorbeugend gewartet werden.

Alle im Fahrzeug auftretenden Störfälle werden fahrzeugintern gesammelt und gespeichert und der externen Auswertung zur Verfügung gestellt. Des Weiteren können die in dem externen System für ein bestimmtes Fahrzeug / Fahrzeugtyp erzeugten bzw. eingegangenen Störmeldungen eingelesen und für die fahrzeuginterne Auswertung weiter genutzt werden. Aufgrund der zentral abgelegten Informationen über alle Systeme können die Störungen detailliert ausgewertet und eine Stördatenanalyse durchgeführt werden. Aufbauend auf diese Informationen ist des Weiteren die Möglichkeit gegeben, beispielsweise eine Schwachstellenanalyse durchzuführen.

Im Rahmen der Instandhaltung kann jederzeit auf die fahrzeugintemen gespeicherten Informationen zurückgegriffen und somit können detaillierte Erkenntnisse über den aktuellen Zustand gewonnen werden. Über die im Fahrzeug hinterlegte Instandhaltungshistorie stehen weitere fahrzeugspezifische Informationen zur Verfügung, die durch Zugriff auf das zentrale Datenbanksystem auf die über die gesamte Fahrzeugflotte gewonnenen Erkenntnisse erweitert werden können. Im Rahmen der Materialbewirtschaftung kann durch Verbesserung des Planungsprozesses für die Materialbevorratung durch Einleitung von Präventivmaßnahmen aufgrund von Verschleiß- und Ausfallprognosen sowie zur Optimierung der Instandhaltungsvorgänge unterstützt werden. Durch Aufbau eines Expertensystems, in dem alle aufgetretenen Problemfälle mit deren durchgeführten Instandhaltungsmaßnahmen hinterlegt sind und dem Zugriff auf Expertenwissen bis hin zum Hersteller ist es möglich, eine detaillierte Diagnose / Auswertung aller zu bearbeitenden Störfälle durchzuführen und das Instandhaltungspersonal effektiv zu nutzen und zu unterstützen.

Möglich wird nunmehr die zustandsorientierte Wartung einer Komponente, also nicht mehr nach vorgegebenen Regeln (Zeitintervallen etc.), sondern abhängig von den tatsächlich auf die Komponente über die Zeit wirkenden Betriebs- und Einsatzbedingungen. Bei genauer Kenntnis der Einflüsse auf eine Komponente und ihrer Auswirkung auf die Wartungsregeln können so ereignisabhängig die erforderlichen Wartungen vorgezogen werden, um eine weitere Einsatzbereitschaft nicht zu gefährden, oder hinausgeschoben werden, ohne Nachteile beim Betriebsverhalten befürchten zu müssen.

Zur Diagnose werden Klassenmodelle aufgebaut.

Zur systematischen Identifizierung / Kategorisierung von Systemkomponenten, darauf aufbauend zur Bewertung der logischen Auswertbarkeit sowie Richtlinien zur Implementierung gibt es ein Klassenmodel mit Regeln, um Baugruppen verlässlich in logischen Prozessen verwalten zu können. Die Baugruppen werden eindeutig einer bestimmten Klasse / Kategorie von Systemkomponenten zugeordnet. Danach wird für die jeweilige Klasse angegeben, mit welchen Daten / Mitteln sie in ihrem derzeitigen Zustand logistische Prozesse unterstützt. Bei Bedarf kann die Baugruppe von einer Klasse in eine andere Klasse gewandelt werden, um beispielsweise eine bessere Prozessunterstützung (mehr Daten / Mittel) zu bieten. Die nötigen Maßnahmen zur Wandlung sind der jeweiligen Klasse zugeordnet. Basierend auf den Klassen des Klassenmodels mit Regeln werden Klassenmodelle mit Daten die Ursprünge und Verwendbarkeiten von Daten betrachtet. Dabei sind die Daten einerseits nach System- bzw. Baugruppenbezug aufgelistet, andererseits nach Datenkategorien. Diese Struktur stellt die Abstrahierung sicher. Darüber hinaus erfolgt die Einbeziehung von nicht- elektrischen sowie nicht elektronischen Komponenten (Umgebungs- bzw. Umweltdiagnose-Einflüsse auf Karosserie, Waffenstation etc., Lagerdiagnose etc.) in die Prüftechnik / Diagnostik. Die hier anfallenden Daten werden in gleicher Weise wie die übrigen Daten behandelt.

In die Prognose gehen somit die in On-Board Diagnose und in Off-Board Diagnose generierten Informationen einzeln und / oder kombiniert ein.

Die Kommunikationsschnittstellen zwischen dem fahrzeugintegrierten Rechner und externen Rechnern, wie z. B. dem Instandhaltungsrechner erlauben durch die direkte Anbindung an die Fahrzeugbusse und -aktoren einen steuernden Eingriff in Baugruppen des Fahrzeuges.

Die vorliegende Erfindung kann auch in zivilen Bereichen Einsatz finden, sie ist nicht auf die Nutzung in wehrtechnischen Dienststellen etc. beschränkt.

Anhand eines Ausführungsbeispiels mit Zeichnung soll die Erfindung näher erläutert werden.

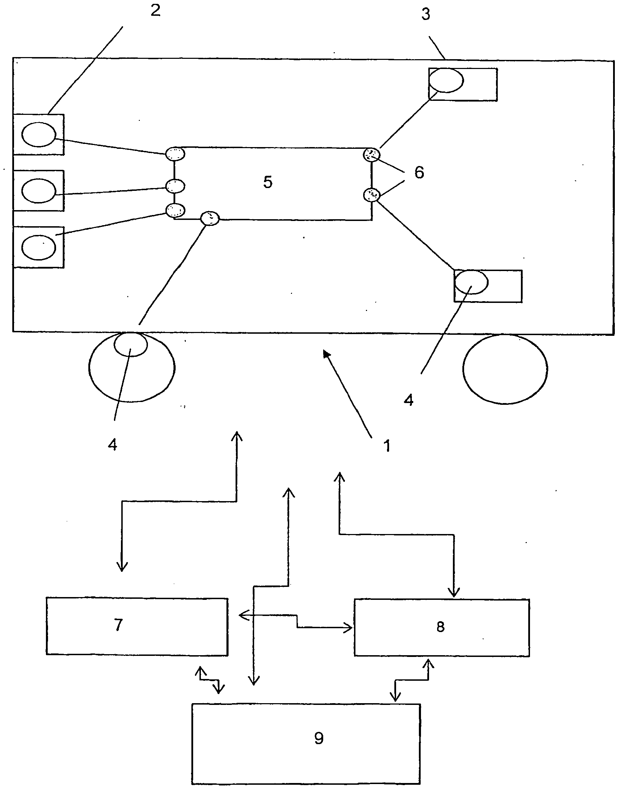

Es zeigt die einzige Figur eine einfache Blockbilddarstellung des Konzeptes, wobei mit 1 ein verallgemeinert dargestelltes Fahrzeug mit bevorzugt einem Waffensystem auf dem Fahrzeug 1 angegeben ist. (Alternativ kann das Waffensystem auch auf einem stationären Objekt angebracht sein.) Das Fahrzeug 1 besteht aus mehreren Baugruppen 2 bzw. Komponenten 3 und mehreren Sensoren 4, die entsprechend ihrer Aufgabe am Fahrzeug 1 angebracht sind. Im Fahrzeug 1 befindet sich ein Rechner 5, der mit einer sogenannten internen Software betriebsfähig ist. Der Rechner 4 kommuniziert über eigenständige Schnittstellenzusatzmodule 6 mit den Sensoren 4 der entsprechenden Baugruppen 2 bzw. Komponenten 3. Des Weiteren kommuniziert der Rechner 5 mit einem oder mehreren externen Rechnern 7, 8, 9, wobei einer dieser Rechner 9 als Zentralrechner fungieren sollte. Zumindest der Zentralrechner 9 besitzt eine vollständige Datensammlung, die durch die Rechner 5, 7, 8 der Fahrzeuge 1 mit fahrzeugspezifischen Informationen angelegt werden. Die Datensammlung enthält zudem beispielsweise ausbildungsrelevante Daten, Materiallisten, Anlageblätter etc., die die Diagnose und Schulungsaufgabe unterstützen.

Zur systematischen Identifizierung / Kategorisierung von Systemkomponenten und darauf aufbauend zur Bewertung der logischen Auswertbarkeit sowie Richtlinien zur Implementierung gibt es ein Klassenmodell mit Regeln, um Baugruppen verlässlich in logischen Prozessen verwalten zu können.

Die eigentliche Klasseneinteilung zu den Klassenmodellen kann wie folgt vorgenommen werden:
Klasse I: Mechanisches System - hierunter fallen beispielsweise eine Fahrzeugkette, ein Waffenrohr, ein Seitenvorgelege und Laufrollen etc. Berücksichtigt werden mechanische Eigenschaften, jedoch keine Aktuatoren oder Sensoren, vielmehr Bauteile, die einem Verschleiß unterliegen.
Klasse II: Mechatronisches System - hierunter fallen beispielsweise ein Motor, diverse Getriebe, Bremsen, Lenzanlagen, ABC-Anlagen, Waffenrichtanlagen etc.
Klasse III: Elektrisch-mechanisches System - hierunter fallen Heizgeräte, Lenzpumpen, Gebläse etc.
Klasse IV: Elektronisches System - schließt Funkanlage, Rechner etc, eben alle elektronischen Systeme auf einem entsprechenden Fahrzeug ein.
Klasse V: Elektrisches System - u. a. die Beleuchtung.
Klasse VI: Hydraulisches/pneumatisches System - umfasst u. a. Teile des auf dem Fahrzeug befindlichen Waffensystems, welche hydraulische / pneumatische Komponenten hat, etc.
Klasse VII: Verbrauchsgüter - wie Munition, Kraftstoff, ABC-Filter, Öl, etc.
Klasse VIII: Fahrzeug- und (wenn auf dem Fahrzeug vorhanden) Waffensystem - betrifft das Gesamtsystem Rechner.
Klasse IX etc: weitere Eingruppierungen - je nach Anforderung bzw. Vorhandensein weiterer Systeme am Fahrzeug, wie beispielsweise bei einem Pionierpanzer, Bergepanzer etc.

Diese voreingestellten Klassenmodelle laufen in jedem der Rechner 5, 7, 8 sowie 9 auf.

Den Klassen / Kategorien werden danach oder gleichzeitig die Baugruppen der Systemkomponenten eindeutig zugeordnet.

Im Rechner 5, 7, 8 werden dazu sogenannte elektronische Typenschilder oder baugruppenintern für die Baugruppen 2 abgespeichert und in ein Bauzustandsmanagement für das gesamte Fahrzeug 1 mit Waffensystem in Form einer Fahrzeugakte übernommen.

Zur eindeutigen Identifizierung werden u. a. Vers- Nr. und Bezeichnung, Teilekennzeichnung, Seriennummer, Hersteller, Softwareversion, Erstbetriebnahme, (vom Hersteller) angegebenen Betriebsstunden / Laufleistung, Einbaudatum, durchgeführte Änderungsanträge, Ausfalldatum mit erreichter Betriebsleistung sowie Fehlerbeschreibung / Fehlerdaten eingetragen, d.h., im Rechner 5 (7, 8, 9) zur Erweiterung der logischen Intelligenz gespeichert.

Gespeichert werden kann auf einem beispielsweise baugruppeneigenen / anbringbaren RFID-Chip. Für Baugruppen 2 oder Komponenten 3, auf denen kein RFID angebracht werden kann, werden die obigen Daten bei Einbau der Baugruppe 2 über den Rechner in die Fahrzeugakte eingegeben. Ist die Identifizierung softwaremäßig in der Baugruppe 2 abgelegt, kann diese aktualisiert und direkt in die Fahrzeugakte übernommen werden.

In der Fahrzeugakte werden weitere Daten hinterlegt, die sich auf das Gesamtfahrzeug beziehen, wie Fahrzeugkennzeichen (Y-Nummer), Dienststellen- Nr. (Einheit), Referenzkonfigurationsstand, Laufleistung, Betriebsstunden, Verbrauch, durchgeführte Untersuchungen etc.

Zur Diagnose liefern die Sensoren 4 des Fahrzeuges 1 laufend Informationen. Diese werden mit den Daten in der Fahrzeugakte im Rechner 5 abgeglichen. Liegt dem Rechner 5 die Information aus dem Zentralrechner 9 vor, dass beispielsweise der Anlasser (nicht näher dargestellt) nunmehr die vom Hersteller vorgegebene oder durch andere gleiche (äquivalente) Anlasser gleichen Fahrzeugtyps mit gleichen Einsatzbedingungen ermittelte Betriebs- bzw. Anlassstunden erreicht sind, (in der Regel die Stunden, nach denen diese Anlasser durch Ausfall gewechselt werden mussten,) wird dies beispielsweise auf einem Monitor 10 sichtbar gemacht, die Wartungs- bzw. Instandhaltungskette begonnen. In diesem Fall wird dann an diesem Fahrzeug 1 der Anlasser vorsorglich gewechselt.

Gleiches Szenario ergibt sich für einen Fahrzeugmotor, einen Stellmotor für die Waffe, Karosserieteile, Radabnutzungen (Mantel) etc., für alle Komponenten, die in die Diagnose einbezogen sind.

Ist eine direkte Datenübertragung möglich, werden alle Daten und Informationen derart gespeichert, dass sie zu einem späteren Zeitpunkt auslesbar sind.

## Patentansprüche

1. Verfahren zur Steigerung der Effizienz von Fahrzeugen (1) bzw. Fahrzeugsystemen mit und ohne Waffensysteme bei Betrieb, Instandhaltung und Wartung **gekennzeichnet durch** folgende Schritte:
- Aufbau von Klassenmodellen zur Diagnose, zur systematischen Identifizierung / Kategorisierung von Systemkomponenten, mit Regeln, um Baugruppen verlässlich in logischen Prozessen verwalten zu können, wobei die Baugruppen eindeutig einer bestimmten Klasse / Kategorie von Systemkomponenten zugeordnet werden,
- Angabe für die jeweilige Klasse, mit welchen Daten sie in ihrem derzeitigen Zustand logistische Prozesse unterstützt, wobei die Daten zumindest das Einbaudatum, das Ausfalldatum mit erreichter Betriebsleistung sowie eine Fehlerbeschreibung als auch Daten umfassen, die sich auf das Gesamtfahrzeug beziehen,
- wobei bei Bedarf die Baugruppe von einer Klasse in eine andere Klasse gewandelt werden kann, um beispielsweise eine bessere Prozessunterstützung zu bieten, wobei die nötigen Maßnahmen zur Wandlung der jeweiligen Klasse zugeordnet sind,
- basierend auf den Klassen des Klassenmodels mit Regeln die Ursprünge und Verwendbarkeiten von Daten betrachtet werden,
- die Daten einerseits nach System- bzw. Baugruppenbezug und andererseits nach Datenkategorien aufgelistet werden,
- die Daten werden zudem an eine zentrale Einheit gesendet, wodurch die Daten einzelner Fahrzeugfamilien miteinander verglichen und für die Ausfallprognose der Bauteile andere Fahrzeugmitglieder herangezogen werden und
- so Informationen über die Verfügbarkeit, über Betriebsdaten und eine Nachweisführung aufgebaut werden, die ihrerseits dann in die Logistik eingreifen.

2. Verfahren nach Anspruch 1, **dadurch gekennzeichnet, dass** eine digitale Fahrzeugakte in einem Rechner (5) hinterlegt ist.

3. Verfahren nach einem der Ansprüche 1 bis 2, **dadurch gekennzeichnet, dass** der aktuelle Zustand an den Baugruppen (2) bzw. Komponenten (3) des Fahrzeuges (1) mittels Sensoren (4) gemessen wird, diese Status- bzw. Zustandsdaten in den fahrzeuginternen Rechnereinheiten (5) gelesen werden, wobei diese mit wenigstens einer weiteren externen Rechnereinheit (7, 8, 9) kommunizieren kann, um so externe Diagnosedaten zu gleichen Baugruppen bzw. Komponenten durch die externe Rechnereinheit (7, 8, 9) erhalten zu können, sodass eine Diagnose der Status- bzw. Zustandsdaten anhand der fahrzeugeigenen und der externen Diagnosedaten derart, dass eine ereignisabhängige Wartung bzw. Instandhaltung erfolgt, wobei die Wartung / Instandhaltung vorgezogen wird, wenn eine weitere Einsatzbereitschaft nicht gefährdet werden darf, oder hinausgeschoben wird, wenn keine Nachteile beim Betriebsverhalten zu befürchten sind.

4. Verfahren nach Anspruch 3, **dadurch gekennzeichnet, dass** elektrische / elektronische und nichtelektrische / nicht elektronische Komponenten (3) bzw. Baugruppen (2) in die Diagnose eingebunden sind.

5. Verfahren nach einem der Ansprüche 1 bis 4, **dadurch gekennzeichnet, dass** waffensystemrelevante Daten gespeichert werden.

6. Verfahren nach einem der Ansprüche 1 bis 5, **dadurch gekennzeichnet, dass** die Klassen unterteilt sind in mechanisches System, mechatronisches System, elektrischmechanisches System, elektronisches System, elektrisches System, hydraulisches/pneumatisches System, Verbrauchsgüter etc.

7. Verfahren nach einem der Ansprüche 2 bis 6, **dadurch gekennzeichnet, dass** die Klassenmodelle auf jedem der Rechner (5, 7, 8, 9) voreingestellt auflaufen.

8. Verfahren nach einem der Ansprüche 2 bis 7, **dadurch gekennzeichnet, dass** im Rechner (5, 7, 8) sogenannte elektronische Typenschilder oder baugruppenintern für die Baugruppen (2) abgespeichert und in ein Bauzustandsmanagement für das gesamte Fahrzeug (1) mit Waffensystem in Form der Fahrzeugakte übernommen werden.

9. Verfahren nach einem der Ansprüche 1 bis 8, **dadurch gekennzeichnet, dass** die Speicherung auf einem beispielsweise baugruppeneigenen / anbringbaren RFID-Chip erfolgen kann.

## Claims

1. Method for improving the efficiency of vehicles (1) or vehicle systems with and without weapon systems during operation, maintenance and servicing, **characterized by** the following steps:
- building up of class models for diagnosis, for systematic identification/categorization of system components, with rules, in order to be able to administer assemblies reliably in logical processes, wherein the assemblies are unambiguously assigned to a specific class/category of system components,
- specification for the respective class with which data it supports logistic processes in its current state, wherein the data comprises at least the installation date, the failure date with the operational performance achieved and a fault description as well as data which relate to the vehicle as a whole,
- wherein when necessary the assembly can be changed from one class to another class in order, for example, to provide better process assistance, wherein the necessary measures for converting the respective class are assigned,
- the origins and possible uses of data are considered on the basis of the classes of the class model with rules,
- the data is listed, on the one hand, according to a system reference or assembly reference and, on the other hand, according to data categories,
- the data is additionally transmitted to a central unit, as a result of which the data items of individual vehicle families are compared with one another and said data items are used for the failure prediction of the components of other vehicle members, and
- in this way information about the availability, about operation data and about evidence control is established and can then itself engage in the logistics.

2. Method according to Claim 1, **characterized in that** a digital vehicle file is stored in a computer (5).

3. Method according to one of Claims 1 to 2, **characterized in that** the current state at the assemblies (2) or components (3) of the vehicle (1) is measured by means of sensors (4), and this status data or state data is read into the vehicle-internal computer unit (5), wherein the latter can communicate with at least one further external computer unit (7, 8, 9) in order in this way to be able to receive external diagnostic data at identical assemblies or components through the external computer unit (7, 8, 9), with the result that diagnosis of the status data or state data is carried out on the basis of the vehicle's own diagnostic data and the external diagnostic data in such a way that event-dependent servicing or maintenance takes place, wherein the servicing/maintenance is preferred if further readiness for use must not be put at risk, or postponed if no disadvantages are to be feared in respect of the operating behaviour.

4. Method according to Claim 3, **characterized in that** electrical/electronic and non-electrical/non-electronic components (3) or assemblies (2) are integrated into the diagnostics.

5. Method according to one of Claims 1 to 4, **characterized in that** weapon-system-related data is stored.

6. Method according to one of Claims 1 to 5, **characterized in that** the classes are divided into a mechanical system, mechatronics system, electromechanical system, electronic system, electrical system, hydraulic/pneumatic system, consumer goods etc.

7. Method according to one of Claims 2 to 6, **characterized in that** the class models run in a preset fashion on each of the computers (5, 7, 8, 9).

8. Method according to one of Claims 2 to 7, **characterized in that** so-called electronic type plates are stored in the computer (5, 7, 8) or assembly-internally for the assemblies (2) and are transferred into a construction state management system for the entire vehicle (1) with a weapon system in the form of the vehicle file.

9. Method according to one of Claims 1 to 8, **characterized in that** the storage can take place on an RFID chip which is, for example, specific to the assembly/can be attached.

## Revendications

1. Procédé d'augmentation de l'efficacité de véhicules (1), respectivement de systèmes de véhicules avec ou sans système d'armement lors du fonctionnement, l'entretien et la maintenance, **caractérisé par** les étapes suivantes :
- constitution de modèles de classe à des fins de diagnostic, d'identification systématique, de catégorisation des composants de système, avec des règles, afin de pouvoir administrer des modules de manière fiable dans des processus logiques, dans lequel les modules sont affectés de manière univoque à une classe/catégorie particulière de composants de système,
- indication pour la classe respective, avec lesquelles des données elle assiste dans son état actuel des processus logistiques, dans lequel les données comprennent au moins la date d'installation, la date de défaillance avec la puissance de fonctionnement atteinte ainsi qu'une description de la panne, ainsi que des données, qui se rapportent à la totalité du véhicule,
- dans lequel au besoin le module peut être permuté d'une classe à une autre classe, afin d'offrir par exemple une meilleure assistance au processus, dans lequel les mesures utiles pour la permutation sont affectées à la classe respective,
- les origines et l'utilité pratique des données sont prises en compte sur la base des classes du modèle de classe avec les règles,
- les données sont listées d'une part selon une référence de système, respectivement de module et d'autre part selon les catégories de données,
- les données sont en outre envoyées à une unité centrale, moyennant quoi les données des familles de véhicules individuelles sont comparées les unes avec les autres et pour le diagnostic de défaillance les composants d'autres parties du véhicule sont inclus et
- les informations relatives à la disponibilité, aux données de fonctionnement et un relevé sont constitués, qui interviennent de leur côté dans la logistique.

2. Procédé selon la revendication 1, **caractérisé en ce qu'**un carnet de bord du véhicule est déposé dans un ordinateur (5).

3. Procédé selon une des revendications 1 à 2, **caractérisé en ce que** l'état actuel des modules (2) respectivement des composants (3) du véhicule (1) est mesuré au moyen de capteurs (4), ces données de statut respectivement d'état sont lues dans une unité d'ordinateur (5) interne au véhicule, dans lequel celle-ci peut communiquer avec au moins une autre unité d'ordinateur externe (7, 8, 9), afin de pouvoir ainsi obtenir des données de diagnostic externes relatives aux mêmes modules respectivement composants par l'intermédiaire de l'unité d'ordinateur externe (7, 8, 9), de telle sorte qu'un diagnostic des données de statut respectivement d'état basé sur les données de diagnostic externes et propres au véhicule ait lieu, de sorte qu'une maintenance respectivement un entretien en fonction des évènements soit effectué(e), dans lequel la maintenance / l'entretien est avancé(e), quand la disponibilité opérationnelle ne doit pas être compromise, ou remis à plus tard, quand des inconvénients ne sont pas à craindre lors du fonctionnement.

4. Procédé selon la revendication 3, **caractérisé en ce que** des composants, respectivement des modules (2) électriques / électroniques et non électriques / non électroniques (3) sont intégrés dans le diagnostic.

5. Procédé selon une des revendications 1 à 4, **caractérisé en ce que** des données pertinentes pour le système d'armement sont mémorisées.

6. Procédé selon une des revendications 1 à 5, **caractérisé en ce que** les classes sont divisées en système mécanique, système mécatronique, système électrique-mécanique, système électronique, système électrique, système hydraulique/pneumatique, biens de consommation, etc.

7. Procédé selon une des revendications 2 à 6, **caractérisé en ce que** les modèles de classes sont réglés au préalable sur chacun des ordinateurs (5, 7, 8, 9).

8. Procédé selon une des revendications 2 à 7, **caractérisé en ce que** des dites plaques signalétiques électroniques sont mémorisées dans l'ordinateur (5, 7, 8) ou mémorisées à l'intérieur des modules pour les modules (2) et sont reprises dans une gestion d'état de construction pour la totalité du véhicule (1) avec un système d'armement sous la forme d'un carnet de bord du véhicule.

9. Procédé selon une des revendications 1 à 8, **caractérisé en ce que** la mémorisation peut être effectuée sur une puce RFID par exemple propre au module / qui peut être montée.
